# EUROPEAN PATENT APPLICATION

(11) **EP 1 652 822 A1**
(43) Date of publication of application: **03.05.2006**
(21) Application number: 04742052.6
(22) Date of filing: 08.07.2004
(51) Int. Cl.: C02F 1/50

(54) **METHOD OF CONTROLLING AND DISINFECTING SANITARY HOT WATER DISTRIBUTION SYSTEMS**

(30) Priority: 11.07.2003 ES 200301622
(71) Applicant: Interef 2000 Promocions Inmobiliaries, S.L., 08190 Sant Cugat Del Valles (ES)
(72) Inventor: TAPIAS OLLER, Jordi, E-08022 Barcelona (ES)
(74) Representative: SUGRANES - VERDONCES - FERREGÜELA
(86) International application number: PCT/ES2004/000323
(87) International publication number: WO 2005/005325

(57) **Abstract**

Procedure for controlling and disinfecting clean hot-water distribution circuits to prevent microbial growth, especially *Legionella,* said circuit comprising multiple water outlets (2) and a hot-water storage tank (3), wherein the concentration values of disinfecting agent (7) are regularly taken with a first sensor (8) positioned at the cold-water inlet (4) of the storage tank, and the temperature values of the clean water using second and third temperature sensors (9, 10) positioned inside the storage tank (11) and at the recirculation return (6), respectively; the data obtained is recorded and processed; the disinfecting agent is added to the circuit using dispensing means (12). Device for carrying out the procedure.

## Description

### Technical field of the invention

The present invention relates to a procedure for controlling and disinfecting clean hot-water distribution circuits to prevent microbial growth, especially *Legionella*, the distribution circuit comprising multiple outlets for dispensing hot water and a hot-water storage tank with a cold-water inlet, a hot-water outlet and a hot-water inlet or return. The invention also relates to a device for carrying out the procedure.

### Background of the invention

Water distribution circuits, especially for hot water, are highly exposed to colonization by groups of micro-organisms which, although in controlled concentrations are not toxic to the consumer, in high concentrations can cause numerous illnesses. One of these groups of micro-organisms is the genus of bacteria known as *Legionella,* among which different species are identified, such as, for example, *Legionella* pneumophila, which causes the majority of infections by *Legionella.* In clean-water distribution circuits or refrigeration towers, said micro-organisms find the nutrients and temperature conditions suitable for their multiplication (between 20 to 40°C).

Numerous attempts have been made and multiple devices developed with the aim of controlling and disinfecting circuits against *Legionella.* For this purpose, the example of chlorine solutions, silver salt solutions and treatments using ozone, are known, which are commonly-used disinfectants. It is also usual to conduct brisk increases in temperature in the circuit.

Chlorine is the most widely used disinfectant due to its high effectiveness and low cost, and is usually injected in a discontinuous way in the circuits. Patent US 5,236,600 discloses out a method for disinfecting a water distribution system for a large building, adding chlorine derivatives and an anticorrosive agent. In said patent, it is indicated that different points of a distribution system are first monitored or analysed to determine the levels of *Legionella.* Secondly, a system for injecting chlorine derivative and an inhibiting substance are incorporated into the distribution system, which prevents and minimizes the corrosion that these derivatives might cause in the piping and different elements of the system. The high-dose treatment of disinfectant usually lasts approximately one week, during which the chlorine values at different points are monitored, taking samples and carrying out analyses thereof. Lastly, the dose of disinfectant and corrosion inhibitor is reduced and kept to the authorized levels, controlling the quantity of chlorine in the return line of water to the hot-water storage tank.

One of the disadvantages of using chlorine is that it evaporates due to the high temperatures (between 50 and 60°C) of the circuits and the water content may reach values lower than those required by the health authorities, which require a concentration of between 0.2 and 0.8 parts per million (p.p.m.). In European Patent EP 1156031, in the name of Institut Français du Petrole, a continuous disinfection procedure is disclosed against legionellosis, which comprises a section wherein the water is subjected to a thermal shock via a heat exchanger; and another section wherein free chlorine is generated, produced by an electrolytic cell, which is added in a continuous way to the circuit to offset the losses caused by the rise in temperature. Although with the procedure described, the focal points of *Legionella* are controlled, large quantities of chlorine must be added to keep within the conditions authorized, having an impact on the cost of the disinfection procedure.

Generally, in clean hot-water distribution circuits, a manual sample is taken to determine the quantity of *Legionella,* the temperature and quantity of disinfectant, usually chlorine, is checked at different points, and subsequently, the values are corrected to control microbial growth. Said procedure is not very agile and is usually done over large time intervals, whereby a control procedure such as the one described in the invention is very attractive and provides novel solutions to the aforementioned problems.

### Explanation of the invention

The procedure for controlling and disinfecting clean hot-water distribution circuits to prevent microbial growth, being the object of the present invention, is characterized in that the concentration value of disinfecting agent at the cold-water inlet, and the temperature values of the clean water inside the storage tank and in the recirculation return, respectively, are taken at regular intervals; the data obtained is recorded and processed using control and administration means; and a disinfecting agent is added at any point in the circuit using dispensing means when:
- at least two of the three values correspond to values outside the previously programmed parameters; or
- over a predetermined period of time, one of the values obtained is outside the programmed parameters.

The disinfecting agent is selected from a group comprised of at least one chlorine solution and/or one silver salts solution and/or ozone.

The device for carrying out the procedure to control and disinfect clean hot-water distribution circuits, being the object of the invention, is characterized in that it comprises a first disinfecting agent concentration sensor positioned at the cold-water inlet, a second clean-water temperature sensor inside the storage tank, and a third recirculation water temperature sensor; disinfecting agent dispensing means; and control and administration means of the disinfecting agent dispensing means; all this so that the values obtained by the sensors are sent regularly to the control and administration means of the disinfecting agent dispensing means, which themselves activate the disinfecting agent dispensing means.

According to another characteristic of the device, object of the invention, the control and administration means of the disinfecting agent dispensing means comprise a data processor.

### Brief description of the drawings

The attached drawings illustrate, as a non-restrictive example and to help condense explanation of the invention, an example of a clean hot-water distribution circuit to which the procedure and device being the object of the invention have been applied. In said drawings:
- Fig. 1: is a diagram of a circuit wherein the points for controlling and adding disinfectant, according to the invention, can be seen; and
- Fig. 2: corresponds to an example of a working algorithm used to carry out the control procedure according to the invention.

### Detailed description of the drawings

The state of the art lacks a specific procedure and device for controlling and analysing critical parameters at relevant points of a clean hot-water distribution circuit, with the aim of preventing microbial growth, especially *Legionella.* On this point, it is worth mentioning that there is no procedure for the continuous control of temperature and concentration of disinfecting agent authorized at different points of the circuit and for a determined quantity of disinfecting agent to be automatically added to prevent microbial growth. The attached figures represent an example of a procedure for controlling said parameters and for automatic adjustment of the values. A representation is also given of an example of a device for carrying out the control procedure.

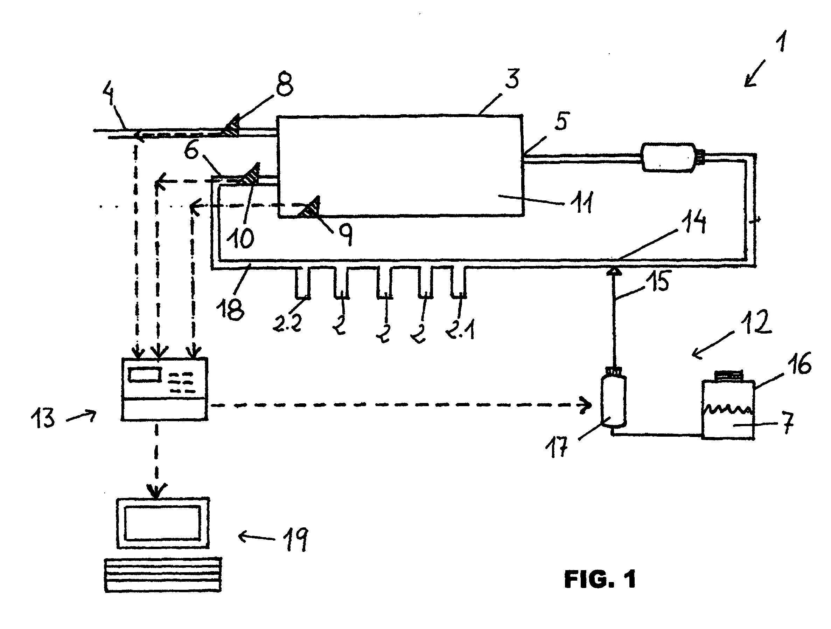

In effect, in Fig. 1, a common distribution circuit 1 is represented which comprises multiple hot-water outlets 2 and a hot-water storage tank 3 with a current or cold-water inlet 4. Also, the circuit 1 has a hot-water outlet 5 and a hot-water recirculation return or inlet 6, and in the current or cold-water inlet 4, coming, for example, from a filter system or tank, not represented, is a first concentration sensor 8 for an authorized disinfecting agent 7, generally chlorine or silver solutions. There are also temperature sensors 9 and 10 on the inside 11 of the storage tank 3 and in the hot-water recirculation return 6.

The disinfecting agent concentration values 7, coming from the water mains, and the temperature values detected and measured by the sensors 8, 9 and 10, respectively, are sent to control and administration means 13 from disinfecting agent dispensing means 12. The control and administration means 13 are able to transmit the values analysed to different receive terminals, such as a computer, telephone terminal, etc., and are programmed to control the means for automatically dispensing disinfecting agent 12, which pour a programmed quantity of disinfecting agent 7 into the distribution circuit 1.

The disinfecting agent 7 is added at any point 14 of the circuit 1. In the case represented in Fig. 1, said addition is done at a point 14 between the hot-water outlet of the storage tank 3 and the distribution outlets 2 of said hot water, more specifically, before the first water-dispensing outlet 2.1. Clearly, depending on the installation, the disinfecting agent 7 can also be added inside the storage tank 11 or in the stretch 18 after the last hot-water outlet 2.2. The disinfecting agent dispensing means 12 are comprised of injection devices 15, which pour a disinfecting agent solution 7 into the circuit 1, contained in an auxiliary tank 16, the quantity injected being regulated via a dosing pump 17. The device for carrying out the control procedure is therefore versatile and can be adapted to any installation or circuit 1.

The dotted lines indicating the direction or arrows that appear in Fig. 1, correspond to the incoming and outgoing signals containing information from the control and administration means 13. Generally, these control and administration means 13 comprise a data processor.

In the case represented, a single sensor 8, 9, 10 is shown at each point, but various sensors 8, 9, 10 can be used at the same point for more precise control of the parameters. In the latter case, the values generated by each of the sensors are averages, the average value being the one analysed by the control and administration means 13.

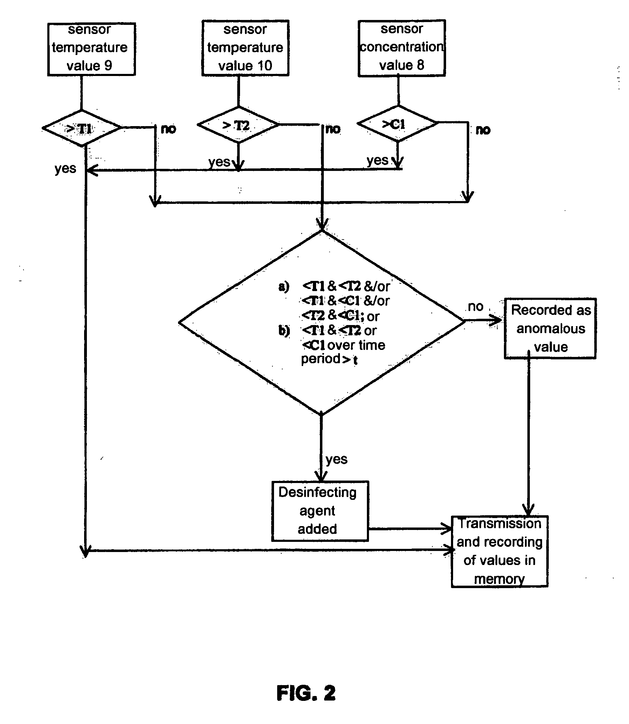

In accordance with Fig. 2, the values regularly taken by the sensors 8, 9, 10, in the control procedure, are recorded and processed by the control and administration means 13. The means for automatic dispensing of disinfectant 12 are activated by the control and administration means 13 and disinfecting agent 7 is added, in what is commonly called shock treatment, only if the following conditions are fulfilled:
a) the values generated by at least two of the sensors 8, 9, 10 correspond to the values outside the previously programmed parameters; or
b) over a predetermined period of time, the values generated by one of the sensors 8, 9, 10 correspond to values outside the programmed values.

Thus, for example, when the concentration value of disinfecting agent 7 detected by the first sensor 8 is lower than a programmed concentration of C1 parts per million (ppm) and the temperature detected by the return sensor 10 is lower than a programmed value T2, the circuit 1 is in the situation described in the first condition and the control and administration means 13 send the order to activate the dispensing means 12, which automatically add disinfecting agent 7 to the circuit 1. In the same way, when, for example, the temperature value detected by the second sensor 9 inside the storage tank 11 is lower than a programmed value T1 for a time interval equal to or greater than a predetermined time t, the means for dispensing 12 are also activated, injecting disinfecting agent 7 into the circuit 1.

Alternatively, when the circuit 1 is in none of the situations described above, but the values generated by one of the sensors 8, 9 and 10 are outside those programmed, a system of alarms is also activated, these being recorded as anomalous situations.

In all cases, all the data detected is recorded, for example, in computer memories and, when the values do not correspond to those previously programmed, the alarms are activated and transmitted, for example, by telephone, to any receive terminal 19.

Normally, the temperature sensors 9 and 10 are programmed so that T1 corresponds to values between 40 and 80°C and T2 is between 30 and 60°C. Said values correspond to the compulsory values established by the standards in force for controlling *Legionella* focal points.

The programmable concentration values C1 of disinfecting agent 7 clearly depend on the authorized disinfecting agent 7 used in each case. In this way, when chlorine solutions are used, C1 is programmed so that it is within 0.2 and 0.8 parts per million (ppm) of chlorine.

The solution of disinfecting agent 7 is prepared using the different authorized disinfectants. Generally, free chlorine solutions are used which, in an aqueous solution, correspond to solutions in equilibrium of the CIO- and HclO kinds. Chlorine is widely used and, in fact, water chlorination is one of the most important steps in the procedure to make water drinkable, which is why the addition of chlorine solutions to clean hot-water distribution circuits 1 is entirely compatible when the procedure and devices being the object of the invention are used. However, the chlorine gradually evaporates due to the high temperatures, which is why the use of solutions containing disinfectants such as silver salts is also applicable, or the addition of ozone to the circuit 1.

When the procedure is carried out for the first time, for example, in new installations or when activated after a long period of time without functioning, the quantity of disinfecting agent 7 added will be greater than that usually used, hence the need to be able to control and administrate the dispensing means 12 by the control and administration means 13, which are programmed as required.

The procedure for controlling and disinfecting clean hot-water distribution circuits 1 to prevent the growth of *Legionella*, together with the device for carrying out said procedure, have been designed for exact and exhaustive control of the critical parameters of a circuit 1 and to make the maintenance thereof easier.

## Claims

1. Procedure for controlling and disinfecting clean hot-water distribution circuits to prevent microbial growth, especially *Legionella,* the distribution circuit (1) comprising multiple outlets for dispensing hot water (2) and a hot-water storage tank (3) and said storage tank having a cold-water inlet (4) and a hot-water outlet (5) and recirculation return or inlet (6), **characterized in that** the concentration value of the disinfecting agent (7) at the cold-water inlet, and the temperature values of the clean water inside the storage tank (11) and in the recirculation return (6), respectively, are taken at regular intervals; the data obtained is recorded and processed using control and administration means (13); and disinfecting agent is added at any point in the circuit using dispensing means (12) when:
- at least two of the three values obtained correspond to values outside the previously programmed parameters; or
- over a predetermined period of time, one of the values obtained is outside the programmed parameters.

2. Procedure according to claim 1, **characterized in that** the disinfecting agent (7) is selected from a group comprised of at least one chlorine solution, one silver solution and/or ozone.

3. Device for carrying out the procedure for controlling and disinfecting clean hot-water distribution circuits (1) according to claims 1 to 2, **characterized in that** it comprises a first disinfecting agent (7) concentration sensor (8) positioned at the cold-water inlet (4), a second clean-water temperature sensor (9) inside the storage tank (11), and a third recirculation water (6) temperature sensor (10); disinfecting agent dispensing means (12); and control and administration means of the disinfecting agent dispensing means (13); all this so that the values obtained are sent by the sensors to the control and administration means, which themselves activate the disinfecting agent dispensing means.

4. Device according to claim 3, **characterized in that** said control and administration means of the disinfecting agent dispensing means (13) comprise a data processor.
